# EUROPÄISCHE PATENTSCHRIFT

(11) **EP 1 485 597 B1**
(45) Veröffentlichungstag und Bekanntmachung des Hinweises auf die Patenterteilung: **20.12.2006**
(21) Anmeldenummer: 03711992.2
(22) Anmeldetag: 13.03.2003
(51) Int. Cl.: F02D 41/14, F02D 41/30, F02D 41/00

(54) **VERFAHREN UND VORRICHTUNG ZUR ADAPTIERTEN SAMMLERDRUCKVORSTEUERUNG**
METHOD AND DEVICE FOR ADAPTED MANIFOLD PRESSURE PILOT CONTROL
PROCEDE ET DISPOSITIF DE COMMANDE PILOTE ADAPTEE DE LA PRESSION D'ADMISSION

(30) Priorität: 21.03.2002 DE 10212515
(43) Veröffentlichungstag der Anmeldung: 15.12.2004
(73) Patentinhaber: Bayerische Motoren Werke Aktiengesellschaft, 80809 München (DE)
(72) Erfinder: EICHLINGER, Erich, 85290 Geisenfeld (DE)
(86) Internationale Anmeldenummer: PCT/EP2003/002580
(87) Internationale Veröffentlichungsnummer: WO 2003/081006

(56) Entgegenhaltungen:
- EP-A- 1 193 381
- DE-A- 10 040 252
- DE-A- 19 727 793
- DE-A- 19 946 730

## Beschreibung

Die Erfindung betrifft ein Verfahren und eine Vorrichtung zur Steuerung des geschichteten Motorbetriebs in direkt einspritzenden Ottomotoren zur Erzielung eines optimalen Verbrauchs sowie zur Kompensation von Bauteiltoleranzen und -verschleiß im Motor durch Anpassung des Sammlerdrucks.

Zum technischen Hintergrund hierzu wird beispielsweise auf die EP 1 193 381 A und die DE 100 40 252 A hingewiesen.

Heutige Systeme zur Steuerung des geschichteten Motorbetriebs in direkt einspritzenden Ottomotoren werden im allgemeinen durch DME (Digital Motor Electronics) bzw. durch die Motorsteuerung realisiert. Als Digital Motor Electronics (DME) wird ein mikroprozessor-basiertes System bezeichnet, das die Zündung, die Kraftstoffeinspritzung, den Sauerstoffsensor und mehrere zusätzliche Funktionen regelt.

Derartige Steuerungen stellen das Motormoment im Schichtbetrieb im wesentlichen durch die eingespritzte Kraftstoffmenge ein. Hierbei müssen weitere Verstellparameter dem jeweiligen Betriebspunkt angepaßt sein. Zu diesen weiteren Verstellparametern gehören im allgemeinen Zündwinkel, Einspritzlage, Drallklappenstellung, AGR-Rate (Abgasrückführungs-Rate), Kraftstoffdruck, Nockenwellenstellung und Sammlerdruck.

Die Stabilität der Verbrennung wird stark vom Sammlerdruck bestimmt. Bei hohem Sammlerdruck läuft der Motor sehr mager, die Laufruhe wird schlechter. Bei niedrigem Sammlerdruck hingegen läuft der Motor fett, der Verbrauch wird schlechter.

Um einen optimalen Verbrauch zu erzielen, ist jedoch in den meisten Betriebspunkten eine möglichst entdrosselte Auslegung des Motors wünschenswert. Weiterhin muß, um Einflüsse wie
- Bauteilstreuung (Injektorstrahlbild, Brennraumgeometrie, Einlasskanaigeometrie)
- Steuerungsungenauigkeiten (z.B. Genauigkeit der AGR-Rate, Drallstellung, ...)
- Alterungseinflüsse (Injektorverkokung, Einlassventilverkokung, ...)
abzudecken, bei der Auslegung des Sammlerdrucks ein bestimmter Sicherheitsvorhalt appliziert werden. Meist wird also zur Erreichung eines aussetzerfreien Betriebs und einer akzeptablen Laufruhe ein geringerer Sammlerdruck und damit ein fetteres Lambda und ein schlechterer Verbrauch in Kauf genommen.

DE-C2-197 27 793 beschreibt ein Verfahren zum Steuern einer Brennkraftmaschine, insbesondere einer Brennkraftmaschine mit Abgasrückführung, bei dem der aktuelle Sollwert der Abgasrückführrate, der abhängig von mindestens einer Betriebsgröße der Brennkraftmaschine ermittelt wird, mit einem Korrekturfaktor korrigiert wird. Hierbei wird der Korrekturfaktor in Abhängigkeit von der Laufruhe der Brennkraftmaschine ermittelt, wenn eine vorgegebene Bedingung erfüllt ist. Weiterhin weist das Verfahren einen Sicherheitsfaktor auf, der derart gewählt ist, daß der korrigierte Sollwert der Abgasrückführrate so klein ist, daß ein komfortabler Lauf der Brennkraftmaschine ohne Ruckeln gewährleistet ist.

Da die Stabilität der Verbrennung stark vom Sammlerdruck abhängt, wird im allgemeinen der Sammlerdruck derart gewählt, daß eine sichere Verbrennung des Luftkraftstoffgemischs in den Zylindern gewährleistet ist. Bei einem hohen Sammlerdruck häufen sich Zündaussetzer und unvollständige Verbrennung des Luftkraftstoffgemischs. Maß hierfür ist die Laufunruhe. Um eine erhöhte Laufunruhe auszuschließen, die den Fahrkomfort mindert und eine unzulässig stark ansteigende Abgasemission bewirkt, wird der Sammlerdruck entsprechend gering gewählt. Weiterhin wird der Sammlerdruck um einen Sicherheitswert vermindert, um weitere Einflüsse kompensieren zu können. Der Betrieb einer Brennkraftmaschine mit derart gewähltem Sammlerdruck bewirkt demnach einen erhöhten Verbrauch zugunsten einer sicheren Laufruhe.

Der vorliegenden Erfindung liegt daher die Aufgabe zugrunde, ein Verfahren und eine Vorrichtung bereitzustellen; mit dem bzw. mit der die Steuerung von direkteinspritzenden Ottomotoren im geschichteten Motorbetrieb unter Erzielung eines optimalen Verbrauchs sowie unter Kompensation von Bauteiltoleranzen und Verschleiß gewährleistet wird.

Diese Aufgabe wird mit den Merkmalen der Patentansprüche gelöst. Die Erfindung geht von dem Grundgedanken aus, eine adaptierte Sammlerdruckvorsteuerung durchzuführen, wobei eine Feinanpassung des einzustellenden Sammlerdrucks zur Erzielung eines optimalen Verbrauchs sowie zur Kompensation von Bauteiltoleranzen und Verschleiß im Motor mittels eines Adaptionsalgorithmus mit Hilfe der Laufunruhemessung durchgeführt wird.

Hierzu wird ein Adaptionsalgorithmus eingeführt, der mit Hilfe der Laufunruhemessung, die bei modernen Motorsteuerungen bereits enthalten ist, eine Feinanpassung des einzustellenden Sammlerdrucks durchführt. Aufgrund der Zusammenhänge zwischen Verbrauch, Laufunruhe und Sammlerdruck ergibt sich hierbei die Regel, den Sammlerdruck bei schlechtem Motorlauf zu verringern und den Sammlerdruck bei gutem Motorlauf zu erhöhen. Die Adaption darf nur erfolgen, wenn bestimmte Bedingungen gegeben bzw. Voraussetzungen erfüllt sind.

Die Laufunruhemessung kann hierbei beispielsweise durch Momentaufnahme an der Kurbelwelle, durch Drucksensoren in den Zylindern, die den Druck in den zugeordneten Zylindern überwachen und mit denen auf diese Weise der Verbrennungsprozeß überwacht werden kann, und durch weitere Signale erfolgen, die Rückschlüsse auf eine gleichförmige Verbrennung in den Zylindern, bzw. die Laufunruhe, geben. Grundsätzlich sind sämtliche Verfahren zur Laufunruhe-, bzw. Laufruhebestimmung, sowohl direkt als auch indirekt, geeignet.

Zu den Bedingungen, die eine Voraussetzung zu einer erfindungsgemäßen Adaption darstellen, gehört beispielsweise, daß der Motor in der Betriebsart Schicht betrieben wird sowie daß ein stationärer oder quasi stationärer Betriebszustand vorliegt. Weiterhin muß der Motor in einem relevanten Drehzahl/Lastpunkt betrieben werden.

Durch einen Software-Integrator wird ein Sammlerdruckadaptionswert ermittelt, der auf den im jeweiligen Lastpunkt vorgesteuerten Sammlerdruck addiert wird. Eine Begrenzung des Adaptionswertes verhindert einen zu großen Hub. Typische Adaptionswerte liegen im Bereicht von -150 mbar bis +50 mbar. Der Adaptionswert wird nach Abstellen des Motors bevorzugt im Steuergerät abgespeichert, damit er bei der nächsten Fahrt wieder zur Verfügung steht.

Ferner soll der Adaptionswert nur in einem bestimmten Lasi/Drehzahlbereich eingerechnet werden. Dieser Bereich ist ähnlich dem Bereich in dem die Funktion freigegeben ist, kann jedoch auch größer gewählt werden.

Weiterhin können mehrere Adaptionswerte eingesetzt und verglichen werden, wenn diese in verschiedenen Lastpunkten gelernt und eingerechnet wurden. Durch die Berücksichtigung von zuvor ermittelten Adaptionswerten in den verschieden Lastpunkten können Informationen von bereits (früher) durchlaufenen Regelschleifen in den Regelprozeß einbezogen und dieser dadurch optimiert werden.

Die Erfindung wird nachfolgend anhand eines Beispiels und der Zeichnungen erläutert. Es zeigen:
- Fig. 1:: eine exemplarische Darstellung des Motorverhaltens in einem Lastpunkt, in Abhängigkeit vom Sammlerdruck und
- Fig.2:: eine bevorzugte Ausführungsform eines Ablaufplans für, einen erfindungsgemäßen Adaptionsalgorithmus.

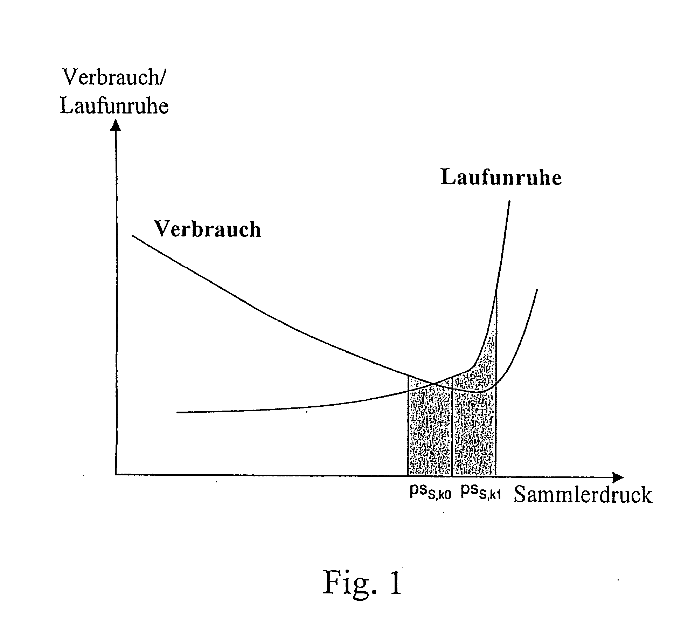

Fig. 1 zeigt deutlich die Abhängigkeit der Verbrennung vom Sammlerdruck. Mit steigendem Sammlerdruck sinkt der Verbrauch zunächst stark ab und die Laufunruhe steigt leicht an. Ab einem kritischen Sammlerdruck ps_{S,k0} sinkt der Verbrauch nur noch minimal, während die Laufunruhe mit steigendem Druck stärker zunimmt. Ab einem kritischen Sammlerdruck ps_{S,k1} steigen sowohl Laufunruhe als auch Verbrauch exponential an. Bei einem hohen Sammlerdruck läuft der Motor sehr mager und die Laufruhe wird schlechter. Ab dem kritischen Sammlerdruck PS_{S,k1} wird das Verbrauchsverhalten der Verbrennung negativ. Die Drücke pS_{S,k0} und pS_{S,k1} können auch als Druckbereiche, die mehrere einzelne Drücke umfassen verstanden werden.

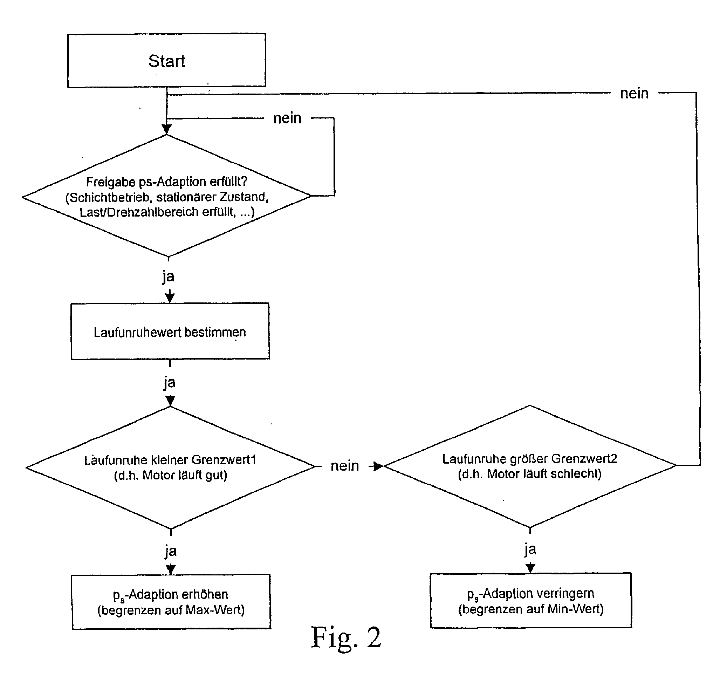

Um einen aussetzerfreien Betrieb und eine akzeptable Laufruhe zu erreichen, wird im Regelfall ein geringer Sammlerdruck (< ps_{S,k0}) und damit ein fetteres Lambda und ein schlechterer Verbrauch in Kauf genommen. Um eine Feinanpassung des einzustellenden Sammlerdrucks zur Erzielung eines aussetzerfreien Betriebs und akzeptablen Laufruhe bei geringem Verbrauch zu gewährleisten, ist ein Adaptionsalgorithmus vorgesehen. Eine bevorzugte Ausführungsform des Ablaufplans eines erfindungsgemäßen Adaptionsalgorithmus ist in Fig. 2 dargestellt. Das Verfahren beginnt an einem bestimmten Startpunkt, vorzugsweise mit dem Starten des Motors. Zunächst erfolgt eine Überprüfung der Aktivierungsbedingungen des Systems. So darf die Adaption nur dann erfolgen, wenn folgende Bedingungen gegeben sind:
- Motor ist in der Betriebsart Schicht,
- es liegt ein stationärer oder quasi stationärer Betriebszustand vor,
- der Motor muß in einem relevanten Drehzahl/Lastpunkt betrieben werden
- weitere Freigabebedingungen aus anderen Motorsteuerfunktionen sind gegeben.

Sobald die notwendigen Bedingungen für die Aktivierung der Adaption vorliegen, wird der Laufunruhewert bestimmt. Liegen die Freigabebedingungen der Sammlerdruckadaption nicht vor, wird die Überprüfung wiederholt durchgeführt, ob die Bedingungen vorliegen. Eine derartige Abfrage kann kontinuierlich, in festen oder variablen Abständen oder auch als Reaktion auf bestimmte Ereignisse erfolgen. Liegen die notwendigen Bedingungen vor, bleibt die Adaption aktiviert, bis die Bedingungen nicht mehr vorliegen. Das Deaktivieren der Adaption erfolgt hierbei sobald eine oder mehrere der Bedingungen nicht mehr vorliegen. Der Übergang vom aktiven in den inaktiven Zustand, kann gleichmäßig oder versetzt (Hysterese) erfolgen.

Liegen die Freigabebedingungen vor wird der Laufunruhewert bestimmt. Der ermittelte Laufunruhewert wird mit einem Grenzwert 1 verglichen. Hierbei ist der Grenzwert 1 für die Laufunruhe derart gewählt, daß aus einer Laufunruhe kleiner dem Grenzwert 1 geschlossen werden kann, daß der Motor gut läuft. Weiterhin ist der Grenzwert 1 so gewählt, daß aus einem Unterschreiten des Grenzwertes 1 auf einen suboptimal hohen Verbrauch geschlossen werden kann. In diesem Fall wird daher der Sammlerdruckadaptionswert erhöht, wobei die Erhöhung vorzugsweise auf einen Maximalwert begrenzt ist.

Ist der ermittelte Laufunruhewert größer oder gleich dem Grenzwert 1, wird der Laufunruhewert mit einem Grenzwert 2 verglichen. Ist der ermittelte Laufunruhewert kleiner oder gleich dem Grenzwert 2 befinden sich Laufunruhe, Sammlerdruck (p_{S}) und Verbrauch innerhalb eines optimalen Bereichs. Ist der Laufunruhewert jedoch größer als der Grenzwert 2, bedeutet dies, daß der Motor schlecht läuft. Das bedeutet, daß sowohl Laufunruhe als auch der Verbrauch ungünstige Werte angenommen haben. In diesem Fall wird der Sammlerdruckadaptionswert verringert, wobei die Verringerung vorzugsweise auf einen Minimalwert begrenzt ist.

Ist der ermittelte Laufunruhewert kleiner oder gleich dem Grenzwert 2, erfolgt eine neue Überprüfung der Freigabebedingungen, und der Adaptionsalgorithmus wird wie beschieben durchlaufen. Ist der Sammlerdruck korrigiert worden, wird die Adaption erneut durchlaufen. Auch hierbei wird, wie oben beschrieben, mit der Überprüfung der Freigabebedingungen begonnen.

Durch eine kontinuierliche Überprüfung der Laufunruhe sowie eine entsprechende Adaption des Sammlerdruckes (p_{S}) wird eine optimale Laufruhe bei optimalem Verbrauch innerhalb eines eng gesteckten Rahmens ermöglicht.

Der Sammlerdruckadaptionswert (ps-Adaptionswert), der auf einen Maximal- und Minimalwert begrenzt ist, wird in einer bevorzugten erfindungsgemäßen Ausführungsform in Abhängigkeit von der Differenz des Grenzwertes 1 bzw. 2 und dem gemessenen Laufunruhewert bestimmt. In einer weiteren bevorzugten Ausführungsform bestimmt sich der Sammlerdruckadaptionswert aus der relativen Differenz der entsprechenden Werte. In einer weiteren bevorzugten erfindungsgemäßen Ausführungsform werden weitere Parameter, wie z.B. die Drehzahl oder der Lastpunkt bei der Berechnung des Sammlerdruckadaptionswerts berücksichtigt.

Der Algorithmus zur Sammlerdruckadaption wird bevorzugt kontinuierlich durchlaufen, wobei er in weiteren bevorzugten Ausführungsformen in gleichbleibenden oder veränderlichen zeitlichen Abständen, die weiterhin vorgegeben oder bevorzugt auf Basis von Rahmenbedingungen errechnet werden, durchlaufen wird. Durch die genauere Vorsteuerung des Sammlerdrucks und der anderen Motorparameter kann eine weitere Reduzierung des Verbrauchs erreicht werden, da keine Vorhalte mehr appliziert werden müssen. Hierbei kann in den einzelnen Betriebspunkten ein geschätzter Verbrauchsvorteil von 0,5 bis 1% erreicht werden.

Weiterhin können durch die erfindungsgemäße Adaption des Sammlerdrucks Veränderungen in der Geometrie des Motors durch Bauteiltoleranzen und/oder durch Alterungseinflüsse, wie z.B. Ablagerungen oder Verschleiß kompensiert werden.

## Patentansprüche

1. Verfahren zur Steuerung von direkt einspritzenden Ottomotoren im geschichteten Motorbetrieb, **dadurch gekennzeichnet, dass** in einem ersten Verfahrensschritt die Freigabe der Sammlerdruckadaption geprüft wird, dass in einem zweiten Schritt der Laufunruhewert bestimmt wird, dass in einem dritten Schritt der ermittelte Laufunruhewert mit einem ersten Grenzwert (1) verglichen wird und dass der Sammlerdruckadaptionswert erhöht wird, wenn der Laufunruhewert kleiner als der erste Grenzwert (1) ist.

2. Verfahren nach Anspruch 1, wobei der erste Schritt solange wiederholt wird, bis eine Freigabe festgestellt wird und erst dann der zweite Schritt erfolgt.

3. Verfahren nach Anspruch 1 oder 2, wobei der ermittelte Laufunruhewert mit einem zweiten Grenzwert (2) verglichen wird, wenn der Laufunruhewert größer oder gleich dem ersten Grenzwert (1) ist.

4. Verfahren nach Anspruch 3, wobei der Sammlerdruckadaptionswert verringert wird, wenn der Laufunruhewert größer als der zweite Grenzwert (2) ist.

5. Verfahren nach einem der vorangegangenen Ansprüche, wobei das Verfahren mit dem ersten Schritt fortsetzt, sofern die Laufunruhe kleiner oder gleich dem zweiten Grenzwert (2) ist.

6. Verfahren nach einem der vorangegangenen Ansprüche, wobei der Sammlerdruckadaptionswert auf einen Maximalwert und/oder einem Minimalwert begrenzt ist.

## Claims

1. A method of controlling direct injection spark-ignition engines in multilayer operation, **characterised in that** enabling of manifold pressure adaptation is checked in a first step, the jerky running value is determined in a second step, the determined jerky running value is compared with a first limit value (1) in a third step and the manifold pressure adaptation value is increased if the jerky running value is below the first limit value (1).

2. A method according to claim 1, wherein the first step is repeated until enabling is detected, when the second step can follow.

3. A method according to claim 1 or 2, wherein the determined jerky running value is compared with a second limit value (2) if the jerky running value is greater than or equal to the first limit value (1).

4. A method according to claim 3, wherein the manifold pressure adaptation value is reduced if the jerky running value is greater than the second limit value (2).

5. A method according to any of the preceding claims, wherein the first step is repeated as long as the jerky running value is less than or equal to the second limit value (2).

6. A method according to any of the preceding claims, wherein the manifold pressure adaptation value is limited to a maximum value and/or a minimum value.

## Revendications

1. Procédé de commande d'un moteur à essence à injection directe travaillant en mode stratifié,
**caractérisé en ce que**
dans une première étape du procédé, on vérifie la libération de l'adaptation de la pression de collecteur,
dans une seconde étape, on détermine l'irrégularité de fonctionnement qui est comparée dans une troisième étape à la période de fonctionnement déterminée avec une première valeur limite (1), et
la valeur d'adaptation de la pression de collecteur augmente si la régularité de fonctionnement est inférieure à la première valeur limite (1).

2. Procédé selon la revendication 1,
selon lequel
on répète la première étape jusqu'à ce que l'on ait constaté la libération et ce n'est qu'ensuite que l'on fait la seconde étape.

3. Procédé selon l'une quelconque des revendications 1 ou 2,
selon lequel
on compare la valeur d'irrégularité de fonctionnement obtenue à une seconde valeur limite (2) si la valeur d'irrégularité de fonctionnement est supérieure ou égale à la première valeur limite (1).

4. Procédé selon la revendication 3,
selon lequel
on diminue la valeur d'adaptation de la pression de collecteur si la valeur d'irrégularité de fonctionnement dépasse une seconde valeur limite (2).

5. Procédé selon l'une quelconque des revendications précédentes,
selon lequel
on poursuit le procédé avec la première étape dans la mesure où la régularité de fonctionnement est inférieure ou égale à la seconde valeur (2).

6. Procédé selon l'une quelconque des revendications précédentes,
selon lequel
la valeur d'adaptation du collecteur est limitée à une valeur maximale et/ ou une valeur minimale.
